(19) Europäisches Patentamt
European Patent Office
Office européen des brevets

(11) EP 2 949 703 A1

(12) **EUROPÄISCHE PATENTANMELDUNG**

(43) Veröffentlichungstag:
**02.12.2015 Patentblatt 2015/49**

(51) Int Cl.:
***C08L 67/02*** *(2006.01)* ***C08K 3/32*** *(2006.01)*

(21) Anmeldenummer: **14170369.4**

(22) Anmeldetag: **28.05.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **BASF SE**
**67056 Ludwigshafen (DE)**

(72) Erfinder:
- **Möller, anna Karina**
**64347 Griesheim (DE)**
- **Eibeck, Peter**
**67346 Speyer (DE)**

(54) **Lasertransparente polyester**

(57) Die Erfindung betrifft die Verwendung von thermoplastischen Formmassen, enthaltend
A) 30 bis 100 Gew.-%
eines Polyesters, aufgebaut aus 70 bis 99,99 Gew.-% mindestens eines Polyalkylenterephthalates A1), verschieden von A2, bezogen auf 100 % A) und 0,01 bis 30 Gew.-% eines Polyethylenterephthalates A2)
B) 0 bis 5 Gew.-%
einer Phosphor enthaltenden Verbindung
C) 0 bis 70 Gew.-%
weiterer Zusatzstoffe,
wobei die Summe der Gewichtsprozente der Komponenten A) bis C) 100 % ergibt,
zur Herstellung von lasertransparenten Formkörpern jeglicher Art.

EP 2 949 703 A1

## Beschreibung

Die Erfindung betrifft die Verwendung von thermoplastischen Formmassen, enthaltend

| | |
|---|---|
| A) 30 bis 100 Gew.-% | eines Polyesters, aufgebaut aus 70 bis 99,99 Gew.-% mindestens eines Polyalkylenterephthalates A1), verschieden von A2, bezogen auf 100 % A) und 0,01 bis 30 Gew.-% eines Polyethyl-enterephthalates A2) |
| B) 0 bis 5 Gew.-% | einer Phosphor enthaltenden Verbindung |
| C) 0 bis 70 Gew.-% | weiterer Zusatzstoffe, |

wobei die Summe der Gewichtsprozente der Komponenten A) bis C) 100 % ergibt,
zur Herstellung von lasertransparenten Formkörpern jeglicher Art.

Weiterhin betrifft die Erfindung ein Verfahren zur Herstellung und die Verwendung der laser-transparenten Formkörper zur Herstellung von Formkörpern mittels Laserdurchstrahlschweißverfahren, Verfahren zur Herstellung derartiger Formkörper sowie deren Verwendung in unterschiedlichen Anwendungsbereichen.

Für die Verschweißung von Kunststoffformteilen existieren verschiedene Verfahren (Kunststoffe 87, (1997), 11, 1632 - 1640). Voraussetzung für eine stabile Schweißnaht ist im Falle der weit verbreiteten Verfahren des Heizelementschweißens und des Vibrationsschweißens (z. B. von KFz-Saugrohren) ein ausreichendes Erweichen der Verbindungspartner in der Kontaktzone vor dem eigentlichen Fügeschritt.

Als alternative Methode zum Vibrationsschweißen und Heizelementschweißen findet das Laserdurchstrahlschweißen, insbesondere mit Diodenlaser in letzter Zeit immer stärkere Verbreitung.

Grundlegende Prinzipien des Laserdurchstrahlschweißens sind in der Fachliteratur beschrieben (Kunststoffe 87, (1997) 3, 348 - 350; Kunststoffe 88, (1998), 2, 210 - 212; Kunststoffe 87 (1997) 11, 1632 - 1640; Plastverarbeiter 50 (1999) 4, 18 - 19; Plastverarbeiter 46 (1995) 9, 42 - 46).

Voraussetzung für die Anwendung des Laserdurchstrahlschweißens ist, dass die vom Laser emittierte Strahlung zunächst ein Formteil durchdringt, das für Laserlicht der eingesetzten Wellenlänge ausreichend transparent ist und im folgenden dieser Anmeldungsschrift als lasertransparentes Formteil bezeichnet wird, und dann von einem zweiten Formteil in einer dünnen Schicht absorbiert wird, das das lasertransparente Formteil kontaktiert und im folgenden laserabsorbierendes Formteil genannt wird. In der dünnen Schicht, die das Laserlicht absorbiert, wird die Laserenergie in Wärme umgewandelt, die zum Aufschmelzen in der Kontaktzone und letztlich zur Verbindung des lasertransparenten und des laserabsorbierenden Formteils durch eine Schweißnaht führt.

Für Laserdurchstrahlschweißen werden üblicherweise Laser im Wellenlängenbereich von 600 bis 1200 nm eingesetzt. Im Bereich der Wellenlänge der für das Thermoplastschweißen eingesetzten Laser sind Nd:YAG-Laser (1064 nm) oder Hochleistungsdiodenlaser (800 - 1000 nm) üblich. Wenn im Folgenden die Begriffe lasertransparent und laserabsorbierend verwendet werden, beziehen sie sich immer auf den oben genannten Wellenlängenbereich.

Für das lasertransparente Formteil ist im Gegensatz zum laserabsorbierenden Formteil eine hohe Lasertransparenz im bevorzugten Wellenlängenbereich erforderlich, damit der Laserstrahl bis zur Schweißfläche mit der erforderlichen Energie vordringen kann. Die Messung des Transmissionsvermögens für IR-Laserlicht erfolgt beispielsweise mit einem Spektralphotometer und einer integrierenden Photometerkugel. Diese Meß-anordnung detektiert auch den diffusen Anteil der transmittierten Strahlung. Es wird nicht nur bei einer Wellenlänge, sondern in einem Spektralbereich gemessen, der alle z. Zt. für den Schweißvorgang eingesetzten Laserwellenlängen umfasst.

Heute stehen dem Anwender mehrere Laserschweißverfahrensvarianten zur Verfügung, die alle auf dem Durchstrahlprinzip beruhen. So stellt das Konturschweißen einen sequenziellen Schweißprozess dar, bei dem entweder der Laserstrahl entlang einer frei programmierbaren Nahtkontur geführt oder das Bauteil relativ zum fest installierten Laser bewegt wird. Beim Simultanschweißen wird die linienförmig emittierte Strahlung einzelner Hochleistungsdioden entlang der zu schweißenden Nahtkontur angeordnet. Das Aufschmelzen und Verschweißen der gesamten Kontur erfolgt somit zeitgleich. Das Quasi-Simultanschweißen stellt eine Kombination aus dem Kontur- und dem Simultanschweißen dar. Der Laserstrahl wird mit Hilfe von galvanometrischen Spiegeln (Scannern) mit einer sehr hohen Geschwindigkeit von 10 m/s und mehr entlang der Schweißnahtkontur geführt. Durch die hohe Verfahrgeschwindigkeit wird der Fügebereich nach und nach erwärmt und aufgeschmolzen. Gegenüber dem Simultanschweißen besteht eine hohe Flexibilität bei Veränderungen der Schweißnahtkontur. Das Maskenschweißen ist ein Verfahren, bei dem ein linienförmiger Laserstrahl quer über die zu fügenden Teile bewegt wird. Durch eine Maske wird die Strahlung gezielt abgeschattet und trifft nur dort, wo geschweißt werden soll, auf die Fügefläche. Das Verfahren erlaubt die Herstellung sehr exakt positionierter Schweißnähte. Diese Verfahren sind dem Fachmann bekannt und z.B. in "Handbuch Kunststoff-Verbindungstechnik" (G. W. Ehrenstein, Hanser, ISBN 3-446-22668-0) und / oder DVS-Richtlinie 2243 "Laserstrahlschweißen thermoplastischer Kunststoffe" beschrieben.

Unabhängig von der Verfahrensvariante ist der Laserschweißprozess stark abhängig von den Materialeigenschaften der beiden Fügepartner. Der Grad der Lasertransparenz (LT) des durchstrahlten Teils beeinflusst direkt die

Prozessgeschwindigkeit durch die pro Zeit einbringbare Energiemenge. Teilkristalline Thermoplaste haben in der Regel eine geringere Lasertransparenz durch ihre inhärente Mikrostruktur, meist in Form von Spheruliten. Diese streuen das eingestrahlte Laserlicht stärker als die innere Struktur eines rein amorphen Thermoplasten: Rückwärtsstreuung führt zu einer verminderten Gesamtenergiemenge in Transmission, diffuse (Seitwärts-) Streuung führt oftmals zu einer Aufweitung des Laserstrahls und somit Verlust in der Schweißpräzision. Bei Polybutylenterephthalat (PBT) sind diese Phänomene besonders stark ausgeprägt, es weist im Vergleich zu anderen, gut kristallisierenden Thermoplasten wie beispielsweise PA eine besonders niedrige Lasertransparenz und hohe Strahlaufweitung auf. Daher findet PBT noch vergleichsweise wenig Verwendung als Material für lasergeschweißte Bauteile, obwohl sein sonstiges Eigenschaftsprofil (z.B. die gute Dimensionsstabilität und geringe Wasseraufnahme) es für derartige Anwendungen sehr attraktiv sein lässt. Eine teilkristalline Morphologie ist zwar allgemein hinderlich für eine hohe Lasertransparenz, sie bietet aber Vorteile bei anderen Eigenschaften. So sind teilkristalline Werkstoffe auch oberhalb der Glastemperatur mechanisch belastbar und besitzen im Allgemeinen eine bessere Chemikalienbeständigkeit als amorphe Werkstoffe. Schnell kristallisierende Werkstoffe bieten darüber hinaus in der Verarbeitung Vorteile, insbesondere eine schnelle Entformbarkeit und damit kurze Zykluszeiten. Wünschenswert ist daher die Kombination aus Teilkristallinität, schneller Kristallisation und hoher Lasertransparenz.

Es sind verschiedene Ansätze, die Lasertransparenz von Polyestern, insbesondere PBT zu erhöhen, bekannt. Grundsätzlich lassen diese sich unterscheiden in Blends/Mischungen und Brechungsindexanpassung.

Der Ansatz über Blends/Mischungen beruht auf einer "Verdünnung" des wenig lasertransparenten PBTs mit einem hoch lasertransparenten Blend-/Mischungspartner.
Beispiele hierfür sind in den Schriften: JP2004/315805A1 (PBT + PC/PET/SA + Füllstoff + Elastomer), DE-A1-10330722 (allg. Blend eines teilkristallinen mit einem amorphen Thermoplasten zur Erhöhung der LT; spez. PBT + PET/PC + Glasfaser), JP2008/106217A (PBT + Copolymer mit 1,4-Cyclohexandimethanol; LT von 16% erhöht auf 28%). Nachteilig ist hierbei, dass zwangsweise Polymerblends entstehen, die deutlich andere Eigenschaften haben als Produkte, die überwiegend auf PBT als Matrix basieren.

Der Ansatz Brechungsindexanpassung bezieht sich auf die unterschiedlichen Brechungsindizes von amorphem und kristallinem PBT sowie der Füllstoffe. Hier wurden beispielsweise Comonomere eingesetzt: JP2008/163167 (Copolymer aus PBT und Siloxan), JP2007/186584 (PBT + Bisphenol A Diglycidylether) und JP2005/133087 (PBT + PC + Elastomer + hochrefraktives Silikonöl) seien als Beispiele genannt. Dies führt zwar zu einer Erhöhung der Lasertransparenz, allerdings auf Kosten der mechanischen Eigenschaften. Auch der Brechungsindexunterschied zwischen Füllstoff und Matrix kann verringert werden, siehe JP2009/019134 (Epoxyharz auf Glasfasern gecoatet, um den optischen Übergang zwischen Faser und Matrix anzupassen) oder JP2007/169358 (PBT mit hochbrechender Glasfaser). Derartige Einsatzstoffe sind jedoch nachteilig wegen ihrer hohen Kosten und/oder zusätzlichen Stufen im Herstellprozess.

Weitere (anorganische) Salze, die die Lasertransparenz erhöhen, sind aus den Schriften WO2011/144502, WO2012/119966, WO2012/143314, WO2012/119996 und WO2012/119967, bekannt.

Auch das Blenden von z.B. PBT und PET ist seit langem bekannt (vgl. Modern Polyesters-Chemistry-and Technology of Polyesters and Copolyesters, S. 307 ff). Die Zugabe von PET zu einem GF-gefüllten PBT führt zu glatteren und glänzenderen Oberflächen. PBT-PET-Blends zeigen zwei getrennte Schmelzpunkte und neigen zur Kokristallisation. PBT und PET können bei erhöhter Temperatur miteinander reagieren. Die Bildung dieses Copolymers wirkt sich negativ auf die Kristallisation und die Kristallisationsgeschwindigkeit aus. Dies ist für Spritzgussanwendungen im Allgemeinen unerwünscht.

Aufgabe der vorliegenden Erfindung war es daher, die Lasertransparenz von Blends aus Polyalkylenterephthalaten mit PET zu verbessern. Demgemäß wurde die eingangs definierte Verwendung gefunden. Bevorzugte Ausführungsformen sind den Unteransprüchen zu entnehmen. Ferner wurde ein verbessertes Verfahren zur Herstellung von lasertransparenten Formkörpern gefunden.

Als Komponente A) enthalten die erfindungsgemäß verwendbaren Formmassen 30 bis 100, vorzugsweise 40 bis 100 Gew.-% eines Polyesters, aufgebaut aus

A1) 70 bis 99,99, vorzugsweise 90 bis 99,9 und insbesondere 95 bis 99 Gew.-% mindestens eines Polyalkylenterephthalates, verschieden von A2) und

A2) 0,01 bis 30, vorzugsweise 0,1 bis 10 und insbesondere 1 bis 5 Gew.-% eines Polyethylenterephthalates (PET), wobei die Summe A1) und A2) stets 100 % ergibt.

Für den Fall, dass Komponente B) in der Formmasse enthalten ist, betragen die Mengenverhältnisse

A) 30 bis 99,99, vorzugsweise 40 bis 99,95, insbesondere
40 bis 99,9 Gew.-% und
B) 0,01 bis 5, vorzugsweise 0,05 bis 1, insbesondere

0,1 bis 0,5 Gew.-%.

Unter diesem Mengenanteil sollen sowohl Blends von Polyalkylenterephthalaten mit Polyestern verstanden werden als auch Co-Polyester, welche zu mindestens 50 Gew.-% Alkylenterephthalateinheiten aufweisen.

Bevorzugte Polyester A1) sind Polyalkylenterephthalate mit 2 bis 10 C-Atomen im Alkoholteil.

Derartige Polyalkylenterephthalate sind an sich bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch $C_1$-$C_4$-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in an sich bekannter Weise hergestellt werden.

Ein Teil der Terephthalsäure, bis zu 30 mol-%, kann beispielsweise durch 2,6-Naphthalindicarbonsäure, oder Isophthalsäure oder deren Mischungen ersetzt werden. Bis zu 70 mol-%, vorzugsweise nicht mehr als 10 mol-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoff-atomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol oder deren Mischungen bevorzugt.

Besonders bevorzugte Polyalkylenterephthalate leiten sich von Alkandiolen mit 2 bis 6 C-Atomen ab. Von diesen werden insbesondere Polypropylenterephthalat und Polybutylenterephthalat oder deren Mischungen bevorzugt. Weiterhin bevorzugt ist PBT, welches bis zu 1 Gew.-%, vorzugsweise bis zu 0,75 Gew.-% 1,6-Hexandiol und/oder 2-Methyl-1,5-Pentandiol als weitere Monomereinheiten enthält.

Die Viskositätszahl der Polyester (A1) liegt im Allgemeinen im Bereich von 50 bis 220, vorzugsweise von 80 bis 160 (gemessen in einer 0,5 gew.-%igen Lösung in einem Phenol/o-Dichlorbenzolgemisch (Gew.-Verh. 1:1 bei 25°C) gemäß ISO 1628).

Insbesondere bevorzugt sind solche, deren Carboxylendgruppengehalt bis zu 100 mval/kg, bevorzugt bis zu 50 mval/kg und insbesondere bis zu 40 mval/kg Polyester beträgt. Derartige Polyester können beispielsweise nach dem Verfahren der DE-A 44 01 055 hergestellt werden. Der Carboxylendgruppengehalt wird üblicherweise durch Titrationsverfahren (z.B. Potentiometrie) bestimmt.

Insbesondere bevorzugte Polyalkylenterephthalate werden mit Ti-Katalysatoren hergestellt. Diese weisen nach der Polymerisation einen restlichen Ti-Gehalt von kleiner/gleich 250, insbesondere kleiner 200, besonders bevorzugt kleiner 150 ppm auf.

Als erfindungsgemäße Komponente A2) wird Polyethylenterephthalat (PET) in vorstehend aufgeführten Mengenverhältnissen eingesetzt.

Es können dabei verschiedene PET-Typen zum Einsatz kommen, die sich z.B. durch ihre Viskosität und/oder den darin enthaltenen Katalysatoren unterscheiden. Für das erfindungsgemäße Verfahren können ebenso verschiedene PET-Copolymere verwendet werden, welche z.B. mit folgenden Monomeren oder Derivaten folgender Monomeren modifiziert wurde: Diethylenglykol, Polyethylenglykol, Cyclohexandimenthanol (cis-, trans- oder Mischungen), 2,2,4,4-Tetramethyl-1,3-cyclobutandiol, Norbornan-2,3-Dicarbonsäure, Isophthalsäure, t-Butylisophthalsäure, Natriumhydrogen-5-sulfoisophthalat, Naphthalendicarbonsäure, Hydroxybenzoesäure, Adipinsäure.

Die Anteile derartiger Comonomerer beträgt in der Regel nicht mehr als 5, vorzugsweise nicht mehr als 2 Gew.-%, bezogen auf 100 % A2).

Die einsetzbaren PET-Typen können die allgemein bekannten Katalysatoren enthalten. Diese umfassen Salze von Ca, Mg, Zr, Mn, Zn, Pb, Sb, Sn, Ge und Ti wie z.B. Oxide, Alkoxide, und/oder von organischen Säuren abgeleitete Salze, wie z.B. Acetate, Oxalate, Citrate und/oder Lactate sowie Glykolate und Komplex-/Chelatverbindungen dieser Metalle sowie Mischung davon.

Der Restgehalt dieser Katalysatoren sollte einen Metallgehalt von 300 ppm, vorzugsweise 260 ppm im eingesetzten PET A2) nicht überschreiten.

Die Viskositätszahl der PET-Komponente liegt im Allgemeinen im Bereich von 30 bis 220, vorzugsweise von 30 bis 100 (gemessen in einer 0,5 gew.-%igen Lösung in einem Phenol/o-Dichlorbenzolgemisch (Gew.-Verh. 1:1 bei 25 °C) gemäß ISO 1628.

Als Komponente B) können die erfindungsgemäß verwendbaren Formmassen 0 bis 5, vorzugsweise bis zu 2 Gew.-% einer Phosphor enthaltenden Verbindung enthalten.

Geeignete Verbindungen sind Organo-Phosphite, wie z.B. Bis (2,4-di-t-butylphenyl)pentaerythritol-diphosphit, Organo-Phosphate, wie z.B. Triphenyl-phosphat, Di-n-dodecyl- und Di-n-octadecyl-phosphat sowie Organo-Phosphinite, Organo-Phosphonite, wie z.B. Phosphonsäure oder deren Salze.

Bevorzugt enthalten die erfindungsgemäßen Formmassen als Komponente B) eine phosphorhaltige anorganische Säure oder deren Salze oder deren Esterderivate oder deren Mischungen.

Bevorzugte Säuren sind die Sauerstoffsäuren des Phosphors wie hypophosphorige Säure (Phosphinsäure), phosphorige Säure, Phosphorsäure oder deren Mischungen.

Als Metallkationen für derartige Salze sind Übergangsmetallkationen oder Alkali- oder Erdalkalimetallkationen geeignet, wobei Calcium, Barium, Magnesium, Natrium, Kalium, Mangan, Aluminium oder deren Mischungen besonders bevorzugt sind.

Besonders bevorzugte Salze sind Na-hypophosphit, Ca-hypophosphit, Mangan (II)-hypophosphit $Mn(H_2PO_2)_2$, Aluminium-hypophosphit oder deren Mischungen.

Geeignete bevorzugte Esterderivate (Phosphonate oder deren Salze) der Sauerstoffsäuren des Phosphors sind solche, welche gleiche oder verschiedene Alkylreste mit 1 bis 4 C-Atomen, Arylreste mit 6 bis 14 C-Atomen als Substituenten tragen.

Bevorzugte Verbindungen sind beispielsweise das Ca-Salz eines Phosphonates (erhältlich als Irgamol® 195 der BASF SE) oder der Diethylester eines Phosphonates (erhältlich als Irgamol® 295 der BASF SE).

Als Komponente C) können die erfindungsgemäßen Formmassen 0 bis 70, insbesondere bis zu 60 Gew.-% weiterer Zusatzstoffe und Verarbeitungshilfsmittel enthalten, welche verschieden von B) und/oder A) sind, bezogen auf 100 Gew.% A), B) und C).

Übliche Zusatzstoffe C) sind beispielsweise in Mengen bis zu 40, vorzugsweise bis zu 15 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im Folgenden werden einige bevorzugte Arten solcher Elastomere vorgestellt.

Bevorzugte Arten von Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Mono-merengemisch in den Kautschuk eingebaut

$$R^1C(COOR^2)=C(COOR^3)R^4 \qquad (I)$$

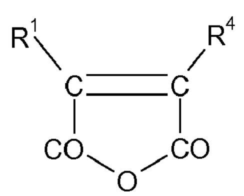

(II)

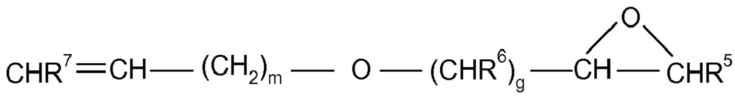

(III)

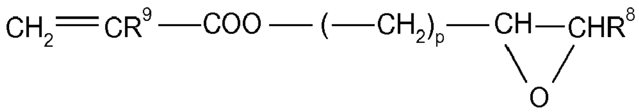

(IV)

wobei $R^1$ bis $R^9$ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste $R^1$ bis $R^9$ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppenenthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus

50 bis 98, insbesondere 55 bis 95 Gew.-% Ethylen,

0,1 bis 40, insbesondere 0,3 bis 20 Gew.-% Glycidylacrylat und/oder Glycidylmethacrylat, (Meth)acrylsäure und/oder Maleinsäureanhydrid, und

1 bis 45, insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, $\alpha$-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel

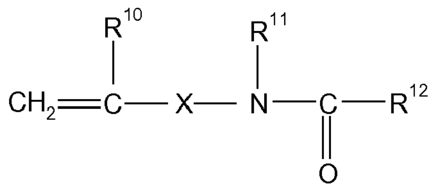

eingeführt werden können,
wobei die Substituenten folgende Bedeutung haben können:

$R^{10}$ Wasserstoff oder eine $C_1$- bis $C_4$-Alkylgruppe,

$R^{11}$ Wasserstoff, eine $C_1$- bis $C_8$-Alkylgruppe oder eine Arylgruppe, insbesondere Phenyl,

$R^{12}$ Wasserstoff, eine $C_1$- bis $C_{10}$-Alkyl-, eine $C_6$- bis $C_{12}$-Arylgruppe oder $-OR^{13}$

$R^{13}$ eine $C_1$- bis $C_8$-Alkyl- oder $C_6$- bis $C_{12}$-Arylgruppe, die gegebenenfalls mit O- oder N-haltigen Gruppen substituiert sein können,

X eine chemische Bindung, eine $C_1$- bis $C_{10}$-Alkylen- oder $C_6$-$C_{12}$-Arylengruppe oder

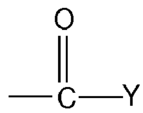

Y O-Z oder NH-Z und

Z eine $C_1$- bis $C_{10}$-Alkylen- oder $C_6$- bis $C_{12}$-Arylengruppe.

Auch die in der EP-A 208 187 beschriebenen Pfropfmonomeren sind zur Einführung reaktiver Gruppen an der Oberfläche geeignet.
Als weitere Beispiele seien noch Acrylamid, Methacrylamid und substituierte Ester der Acrylsäure oder Methacrylsäure wie (N-t-Butylamino)-ethylmethacrylat, (N,N-Dimethyl-amino)ethylacrylat, (N,N-Dimethylamino)-methylacrylat und (N,N-Diethylamino)ethyl-acrylat genannt.
Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.
Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.
Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.
Im Allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.
Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Diese Pfropfpolymerisate, insbesondere ABS- und/oder ASA-Polymere in Mengen bis zu 40 Gew.-%, werden vorzugsweise zur Schlagzähmodifizierung von PBT, gegebenenfalls in Mischung mit bis zu 40 Gew.-% Polyethylenterephthalat eingesetzt. Entsprechende Blend-Produkte sind unter dem Warenzeichen Ultradur®S (ehemals Ultrablend®S der BASF AG) erhältlich.

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als faser- oder teilchenförmige Füllstoffe C) seien Glasfasern, Glaskugeln, amorphe Kieselsäure, Asbest, Calciumsilicat, Calciummetasilicat, Magnesiumcarbonat, Kaolin, Kreide, gepulverter Quarz, Glimmer, Bariumsulfat und Feldspat genannt. Faserförmige Füllstoffe C) werden in Mengen bis zu 60 Gew.-%, insbesondere bis zu 35 Gew.-% eingesetzt, teilchenförmige Füllstoffe werden in Mengen bis zu 30 Gew%, insbesondere bis zu 10 Gew% eingesetzt.

Als bevorzugte faserförmige Füllstoffe seien Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Stark laserabsorbierende Füllstoffe wie beispielsweise Kohlenstofffasern, Russ, Graphit, Graphen oder Kohlenstoffnanoröhrchen werden bevorzugt in Mengen unter 1 Gew.-%, besonders bevorzugt unter 0,05 Gew.-% eingesetzt.

Die faserförmigen Füllstoffe können zur besseren Verträglichkeit mit dem Thermoplasten mit einer Silanverbindung oberflächlich vorbehandelt sein.

Geeignete Silanverbindungen sind solche der allgemeinen Formel

$$(X-(CH_2)_n)_k-Si-(O-C_mH_{2m+1})_{4-k}$$

in der die Substituenten folgende Bedeutung haben:

X $NH_2$-,

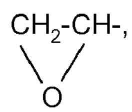

HO-,

n eine ganze Zahl von 2 bis 10, bevorzugt 3 bis 4

m eine ganze Zahl von 1 bis 5, bevorzugt 1 bis 2

k eine ganze Zahl von 1 bis 3, bevorzugt 1.

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,1 bis 1,5 und insbesondere 0,2 bis 0,5 Gew.-% (bezogen auf C) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als Komponente C) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Weichmacher usw. enthalten.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische und organische Pigmente sowie Farbstoffe, wie Nigrosin und Anthrachinone als Farbmittel zugesetzt werden. Besonders geeignete Farbmittel sind beispielsweise in EP 1722984 B1, EP 1353986 B1 oder DE 10054859 A1 genannt.

Weiterhin bevorzugt sind Ester oder Amide gesättigter oder ungesättigter aliphatischer Carbonsäuren mit 10 bis 40, bevorzugt 16 bis 22 C-Atomen mit aliphatischen gesättigten Alkoholen oder Aminen die 2 bis 40, vorzugsweise 2 bis 6 C-Atomen enthalten.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Weitere Gleit- und Entformungsmittel werden üblicherweise in Mengen bis zu 1 Gew.-% eingesetzt. Es sind bevorzugt langkettige Fettsäuren (z.B. Stearinsäure oder Behensäure), deren Salze (z.B. Ca- oder Zn-Stearat) oder Montanwachse (Mischungen aus geradkettigen, gesättigten Carbonsäuren mit Kettenlängen von 28 bis 32 C-Atomen) sowie Ca- oder Na-Montanat sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfon-amid genannt.

Die erfindungsgemäßen Formmassen können noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluor-propylen-Copolymere oder Tetrafluorethylen-Copolymerisate mit kleineren Anteilen (in der Regel bis zu 50 Gew.-%) copolymerisierbarer ethylenisch ungesättigter Mono-merer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Diese fluorhaltigen Ethylenpolymerisate liegen homogen verteilt in den Formmassen vor und weisen bevorzugt eine Teilchengröße $d_{50}$ (Zahlenmittelwert) im Bereich von 0,05 bis 10 $\mu$m, insbesondere von 0,1 bis 5 $\mu$m auf. Diese

geringen Teilchengrößen lassen sich besonders bevorzugt durch Verwendung von wässrigen Dispersionen von fluorhaltigen Ethylenpolymerisaten und deren Einarbeitung in eine Polyesterschmelze erzielen.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt (z.B. Auftragen, oder Auftrommeln der Komponente B) auf das Granulat) werden und dann die restlichen Ausgangsstoffe einzeln und/oder ebenfalls gemischt hinzugegeben werden. Die Mischtemperaturen liegen in der Regel bei 230 bis 290°C. Vorzugsweise kann Komponente B) auch hot feed oder direkt in den Einzug des Extruders zugegeben werden.

Nach einer weiteren bevorzugten Arbeitsweise können die Komponenten B) sowie gegebenenfalls C) mit einem Polyesterpräpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

In einer weiteren bevorzugten Herstellungsmethode wird zunächst ein Batch (Konzentrat) aus A) und B) hergestellt, wobei die Komponente B bis zu 20 Gew.-%, vorzugsweise bis zu 10 Gew.-% in A) (bezogen auf A) + B)) eingearbeitet wird. Dieses Konzentrat wird bei der Herstellung der Rohr- oder Profilextrudate zum Polyester (ohne Zusatzstoffe) als Granulat zudosiert, oder im entsprechenden Mengenverhältnis, z.B. im Taumelmischer vorgemischt, konfektioniert und als Formteil extrudiert.

Ein besonders bevorzugtes Verfahren zur Herstellung von lasertransparenten Formkörpern ist dadurch gekennzeichnet, dass die Komponente A) durch Mischen (wie vorstehend ausgeführt) von Komponente A1) mit A2) sowie gegebenenfalls B) und/oder C) oberhalb des Schmelzpunktes $T_{m2}$ der Einzel- Komponente A2) (250-255 °C) hergestellt wird. Die Verarbeitungstemperaturen betragen in der Regel von 255-300 °C.

Anschließend erfolgt die Verarbeitung zu Formkörpern, z.B. mittels Spritzguss, Blasformen unterhalb des Schmelzpunktes der Komponente A2). Durch das erfindungsgemäße Verfahren wird das Kristallisationsverhalten des Polyesterblends derart beeinflusst, dass die Lasertransparenz und die Verarbeitbarkeit verbessert werden.

Die Bestimmung des Schmelzpunktes erfolgt mittels DSC-Messungen (wie nachfolgend beschrieben.

Die Bestimmung der Schmelzpunkte von Basispolymeren, Polymeren nach der Extrusion oder nach Spritzguss-Verarbeitung erfolgte mittels DSC Messung. Für jede DSC-Messung wurde folgendes Temperaturprogramm angewendet:

1) Halten für 3,0 min bei 13,00 °C;
2) Heizen von 13,00 °C auf 240,00 °C mit 20,00 °C/min; ergibt $T_{m1}$ = Schmelzpunkt im Anlieferungszustand;
3) Halten für 3,0 min bei 240 °C;
4) Kühlen von 240,00 °C auf 13,00 °C mit 20,00 °C/min; ergibt $T_{k1}$ = Temperatur des Kristallisationspeaks;
5) Halten für 1,0 min bei 13,00 °C;
6) Heizen von 13,00 °C auf 300,00 °C mit 20,00 °C/min, ergibt $T_{m2}$ = Schmelzpunkt einer aus der Schmelze mit 20K/min abgekühlten Probe.

Unter Schmelzpunkt soll immer der Schmelzpunkt $T_{m2}$ eines Materials aus dem zweiten Heizlauf verstanden werden. Unter Schmelzpunkt der Komponente A2/A1 soll $T_{m2}$ der reinen Einsatzstoffe verstanden werden (nicht in Tabelle 2) angegeben, sondern unter "Einsatzstoffe"). Er beträgt für die Komponente A2 für gewöhnlich 250-255 °C.

Nach der Extrusion sind die Schmelzpunkte von Systemen, bestehend aus ausschließlich A2 oder A1 (vgl. Tabelle 2), nicht verändert gegenüber den Schmelzpunkten der Einsatzstoffe. Werden die Polyester A2 und A 1 miteinander compoundiert, so findet man im resultierenden Granulat die Schmelzpunkte der beiden Einzelkomponenten nahezu unverändert wieder (Tabelle 2, 2. Spalte, Beispiel 2-8).

Nach dem nächsten Verarbeitungsschritt (Spritzguss) sind auch noch zwei Schmelzpunkte in den Polyestermischungen erkennbar. Jedoch sind die Schmelzpunkte erniedrigt, da teilweise eine Umesterung stattgefunden hat. Je höher die Verarbeitungstemperatur beim Spritzguss ist, desto niedriger sind die Schmelzpunkte.

Die erfindungsgemäß verwendbaren Formmassen eignen sich zur Herstellung von lasertransparenten Formkörpern. Diese weisen vorzugsweise eine Lasertransparenz (bei 1064nm, gemessen an 2mm dicken Formkörpern nach in den Beispielen beschriebener Messmethode) von mindestens 30%, insbesondere mindestens 35 % auf.

Derartige lasertransparente Formkörper werden erfindungsgemäß zur Herstellung von Formkörpern mittels Laserdurchstrahlschweißverfahren verwendet.

Als laserabsorbierendes Formteil können generell Formkörper aus allen laserabsorbierenden Materialien eingesetzt werden. Dies können beispielsweise Verbundstoffe, Duroplaste oder bevorzugte Formkörper aus eigenen thermoplastischen Formmassen sein. Geeignete thermoplastische Formmassen sind Formmassen, die eine ausreichende Laserabsorption im eingesetzten Wellenlängenbereich besitzen. Geeignete thermoplastische Formmassen können beispielweise bevorzugt Thermoplasten sein, die durch Zusatz von anorganischen Pigmenten wie beispielsweise Ruß

und/oder durch Zusatz von organischen Pigmenten oder anderen Additiven laserabsorbierend sind. Geeignete organische Pigmente zur Erzielung von Laserabsorbtion sind beispielsweise bevorzugt IR-absorbierende organische Verbindungen, wie sie beispielsweise in DE 199 16 104 A1 beschrieben sind.

Gegenstand der Erfindung sind ferner Formkörper und/oder Formteilkombinationen, an die erfindungsgemäße Formteile mit dem Laserdurchstrahlschweißen verbunden wurden.

Erfindungsgemäße Formteile eignen sich hervorragend, um mit dem Laserdurchstrahlschweißverfahren an laserabsorbierende Formteile dauerhaft und stabil angebracht werden. Sie eignen sich daher insbesondere für Materialien für Deckel, Gehäuse, Anbauteile, Sensoren beispielsweise für Kfz-, Elektronik-, Telekommunikations-, Informationstechnologie-, Computer-, Haushalts-, Sport-, Medizin- oder Unterhaltungsanwendungen.

Beispiele

Komponente A/1:

Polybutylenterephthalat (PBT) mit einer Viskositätszahl von 130 ml/g und einem Schmelzpunkt $T_{m2}$ von 222,5 °C (Ultradur® B4500 der BASF SE).

Komponente A2/1:

Polyethylenterephthalat (PET) mit einer intrinsischen Viskosität von 0,67 ml/g (laut Datenblatt), VZ = 77.2 ml/g und einem Schmelzpunkt $T_{m2}$ von 254,5 °C, der Polyester enthält 255 mg/kg Antimon laut ICP-OES

Komponente A2/2:

Polyethylenterephthalat (PET) mit einer intrinsischen Viskosität von 0,62 ml/g (laut Datenblatt), VZ = 75.9 ml/g und einem Schmelzpunkt von 253,6 °C, der Polyester enthält 70 mg/kg Mangan, 9 mg/kg Titan und < 3mg/kg Antimon laut ICP-OES

Komponente C1:

Natriumhypophosphit (wasserfrei) von Sigma Aldrich

Die Herstellung der Formmassen erfolgte auf einer ZSK18 bei 265 bis 290 °C flachem Temperaturprofil und Granulierung.

Spritzguss:

Das extrudierte Material wurde anschließend zu Plättchen der Abmessungen 60 x 60 x 2 mm verspritz. Die Massetemperatur betrug 250 °C bzw. 275° C und die Werkzeugtemperatur betrug 80 °C.

Lasertransparenz-Messung:

Die Bestimmung der Lasertransmission bei einer Wellenlänge von 1064 nm wurde mittels einer thermoelektrischen Leistungsmessung durchgeführt. Die Messgeometrie war wie folgt dargestellt: Von einem Laserstrahl (diodengepumpte Nd-YAG-Laser mit einer Wellenlänge von 1064 nm, FOBA DP50) mit einer Gesamtleistung von 2 Watt wurde mittels eines Strahlteilers (Typ SQ2 nichtpolarisierender Strahlteiler von Fa. Laseroptik GmbH) ein Referenzstrahl im Winkel 90° mit 1 Watt Leistung abgeteilt. Dieser traf auf den Referenzsensor. Der den Strahlteiler passierende Teil des ursprünglichen Strahls stellt den Messstrahl mit ebenfalls 1 Watt Leistung dar. Dieser war durch eine Modenblende (5.0) hinter dem Strahlteiler auf einen Fokus mit Durchmesser 0,18$\mu$m fokussiert. In einem Abstand von 80 mm unterhalb des Fokus war der Lasertransparenz(LT)-Messsensor positioniert. Die Testplatte wurde in einem Abstand von 2 mm oberhalb des LT-Messsensors positioniert. Es handelt sich um spritzgegossene Testplatten mit den Abmessungen 60*60*2 $mm^3$, mit Kantenanguss. Es wurde in der Plattenmitte (Schnittpunkt der beiden Diagonalen) gemessen. Die Spritzgussparameter wurden auf folgende Werte eingestellt:

| | Massetemp. [°C] | Werkzeugtemp. [°C] | Einspritzgeschw. [$cm^3$/s] | Nachdruck [bar] |
|---|---|---|---|---|
| unverstärkte Materialien | 260 | 60 | 48 | 600 |
| verstärkte Materialien | 260 | 80 | 48 | 600 |

Die gesamte Messdauer betrug 30 s, wobei das Messergebnis in den letzten 5s ermittelt wird. Die Signale von

Referenz- und Messsensor wurden zeitgleich erfasst. Der Start der Messung erfolgt zeitgleich mit dem Einlegen der Probe.

Die Transmission und damit die Lasertransparenz ergab sich aus folgender Formel:

$$LT = (\text{Signal}(\text{Messsensor}) / \text{Signal}(\text{Referenzsensor})) \times 100\%.$$

Durch diese Messweise wurden Schwankungen der Laseranlage und subjektive Ablesefehler ausgeschlossen.

Für eine Platte wurde der LT-Mittelwert aus mindestens fünf Messungen gebildet. Die Mittelwertbildung wurde für jedes Material an 10 Platten durchgeführt. Aus den Mittelwerten der Einzelplattenmessungen wurde der Mittelwert sowie die Standardabweichung für das Material errechnet.

Bestimmung der Schmelzpunkte mit DSC-Messung:

Die Messungen wurden am Differential Scanning Calorimeter Q2000 der Firma TA Instruments durchgeführt. Die Heizrate betrug 20 K/min, die Einwaage ca. 8,5 mg. Spülgas war Helium. Die Auswertung der Messkurven erfolgte in Anlehnung an die ISO-Norm 11357-3. Als Schmelzpunkt bzw. Rekristallisationspunkt wurde die Temperatur des Schmelzpeaks bzw. Rekristallisierpeaks am Maximum bestimmt. Für die Schmelzpunktbestimmung der Ausgangsstoffe wurden die Proben bis 300 °C aufgeschmolzen. Für die Analyse der Blendsysteme wurde folgendes Programm angewendet:

1) Halten für 3,0 min bei 13,00 °C
2) 2) Heizen von 13,00 °C auf 240,00 °C mit 20,00 °C/min; ergibt Tm1 = Schmelzpunkt im Anlieferungszustand
3) Halten für 3,0 min bei 240 °C
4) Kühlen von 240,00 °C auf 13,00 °C mit 20,00 °C/min; ergibt Tk1 = Temperatur des Kristallisationspeaks
5) Halten für 1,0 min bei 13,00 °C
6) Heizen von 13,00 °C auf 300,00 °C mit 20,00 °C/min, ergibt Tm2 = Schmelzpunkt einer aus der Schmelze mit 20 K/min abgekühlten Probe

Analyse der Viskositätszahl:

Die Viskositätszahl VN wurde gemäß ISO 1628 in 0,5 gew.-%iger Lösung in Phenol/o-Dichlorbenzl (1:1) bei 25 °C bestimmt.

Bestimmung von Kationen in überwiegend organischen Proben durch Induktiv-gekoppelte Plasma-Optische-Emissionsspektrometrie (ICP-OES).

Zur Probenvorbereitung wurden 0,3 - 0,4 g der Probe einem automatisierten Aufschlussverfahren unterzogen. Zunächst erfolgte eine Vercrackung mit ca. 4 mL eines Säuregemisches (konz. Schwefelsäure und konz. Salpetersäure im Volumenverhältnis 39:1 mit 2,2 g/l Cs2SO4.) bei ca. 320 °C. Danach erfolgte eine Zerstörung des Rückstandes mit 6 ml Mischsäure (eine Mischung aus konz. Salpetersäure, konz. Perchlorsäure und konz. Schwefelsäure im Volumenverhältnis 2:1:1) bei ca. 160 °C, bei dem die organischen Anteile durch heiße, konzentrierte Mineralsäuren vercrackt und vollständig oxidiert wurden. Nach Abrauchen der überschüssigen Mineralsäuren wurden die Kationen mit ca. 8 ml 5 Vol % Salzsäure aufgekocht und gelöst. Das genaue Volumen wurde durch Rückwägung und Dichtebestimmung ermittelt. In der erhaltenen Aufschlusslösung wurden die Spurenmetalle mittels Atomemissionsspektrometrie (ICP-OES) gemessen. Die Konzentration der Matrix-Aufschlusslösung und der Standards betrug: c(HCl) ca. 0,6 mol/l, ca. 0,2 % (m/v) Cs2SO4. Es wurde das Gerät ICP-OES-Spektrometer VARIAN 720 - ES verwendet und folgende Messbedingungen eingestellt: Integrationszeit: 10 s, Auxiliary flow: 1,50 l/min, Nebulizer pressure: 230 kPa, Zerstäuber: Conikal 1 ml, Plasma flow: 18,0 L/min, Pump rate: 10 rpm.

Die Zusammensetzungen der Formmassen und die Ergebnisse der Messungen sind den Tabellen zu entnehmen.

Lasertransparenzmessung:

Tabelle 1

| Beispiel | Menge A1 [Gew.-%] | Menge A2 [Gew.-%] | Menge B [Gew.-%] | LT® 1064 nm [%T] 250 °C Massetemperatur | LT® 1064 nm [%T] 275 °C Massetemperatur |
|---|---|---|---|---|---|
| 1 | 100 | 0 | 0 | 27,0 | 26,1 |
| 2 | 95 | A2/1: 5 % | 0 | 34,8 | 34,8 |
| 3 | 90 | A2/1:10 % | 0 | 35,2 | 29,0 |
| 4 | 94,9 | A2/2: 5 % | 0.1 | 31,0 | 33,5 |
| 5 | 94,5 | A2/2: 5 % | 0.5 | 30,5 | 24,7 |
| 6 | 89,9 | A2/2: 10 % | 0.1 | 37,0 | 33,7 |
| Ergebnisse der DSC-Messung; n.b. = nicht bestimmt | | | | | |

Tabelle 2:

| Komponente Beispiel | Schmelzpunkte $T_{m2}$ des Granulats nach Extrusion [°C] | Schmelzpunkte $T_{m2}$ nach Spritzgussverabeitung bei 250 °C [°C] | Schmelzpunkte $T_{m2}$ nach Spritzgussverarbeitung bei 275 °C [°C] | Rekristallisations-temperatur $T_{k1}$ nach Spritzgussverarbeitung bei 250 °C [°C] | Rekristallisationstemperatur Tk1 nach Spritzgussverarbeitung bei 275 °C [°C] |
|---|---|---|---|---|---|
| A2/1 | 254,1 | -.- | 254,6 | -.- | 208,2 °C |
| A2/2 | 253,6 | -.- | n.d. | -.- | n.d. |
| 1 | 222,5 | 223,3 | 223,3 | 190,7 | 190,7 |
| 2 | 222,2; 251,3 | 222,5; 252,3 | 222,5; 250,3 | 200,0 | 200,5 |
| 3 | 221,6; 253,3 | 221,9; 253,6 | 221,6; 251,9 | 200,3 | 201,1 |
| 4 | 221,9; 248,7 | n.b. | n.b. | n.b. | n.b. |
| 5 | 222,0; 249,1 | n.b. | n.b. | n.b. | n.b. |
| 6 | 221,6; 249,7 | 221,6; 250,4 | 222,0; 244,4 | 201,8 | 202,0 |

## Patentansprüche

1. Verwendung von thermoplastischen Formmassen, enthaltend

   A) 30 bis 100 Gew.-% eines Polyesters, aufgebaut aus 70 bis 99,99 Gew.-% mindestens eines Polyalkylenterephthalates A1), verschieden von A2), bezogen auf 100 % A) und 0,01 bis 30 Gew.-% eines Polyethylenterephthalates A2)
   B) 0 bis 5 Gew.-% einer Phosphor enthaltenden Verbindung
   C) 0 bis 70 Gew.-% weiterer Zusatzstoffe,

   wobei die Summe der Gewichtsprozente der Komponenten A) bis C) 100 % ergibt,
   zur Herstellung von lasertransparenten Formkörpern jeglicher Art.

2. Verwendung nach Anspruch 1, wobei die Formmassen aus

   30 bis 99,99 Gew.-% A),
   0,01 bis 5 Gew.-% B),
   0 bis 60 Gew.-% C),

   aufgebaut sind.

3. Verwendung nach den Ansprüchen 1 oder 2, wobei die Komponente B) aus einer phosphorhaltigen, anorganischen Säure oder deren Salze oder deren Esterderivate oder deren Mischungen aufgebaut ist.

4. Verwendung nach den Ansprüchen 1 bis 3, wobei die Komponente B) aus Sauerstoffsäuren des Phosphors oder deren Salze oder deren Mischungen aufgebaut ist.

5. Verwendung nach den Ansprüchen 1 bis 4, wobei der Formkörper einer Lasertransparenz von mindestens 30 % (gemessen bei 1064 nm an einem 2 mm dicken Formkörper) aufweist.

6. Verfahren zur Herstellung von lasertransparenten Formkörpern, **dadurch gekennzeichnet, dass** die Komponente A) durch Mischen von Komponente A1) mit A2) sowie gegebenenfalls B) und/oder C) oberhalb des Schmelzpunktes $T_{m2}$ der Einzel-Komponente A2) und anschließender Verarbeitung unterhalb des Schmelzpunktes $T_{m2}$ der Einzel-Komponente A2), jedoch oberhalb des Schmelzpunktes der Einzel-Komponente A1).

7. Verwendung von lasertransparenten Formkörpern gemäß den Ansprüchen 1 bis 6 zur Herstellung von Formkörpern mittels Laserdurchstrahlschweißverfahren.

8. Verfahren zur Herstellung von verschweißten Formteilen, **dadurch gekennzeichnet, dass** man lasertransparente Formkörper gemäß Anspruch 7 oder gemäß der Verwendung der Ansprüche 1 bis 5 durch Laserdurchstrahlschweißen verbindet.

9. Verschweißte Formteile erhältlich gemäß den Ansprüchen 7 oder 8, welche für Anwendungen in Elektro-, Elektronik-, Telekommunikations-, Informationstechnologie-, Computer-, Haushalts-, Sport-, Medizin-, Kfz- oder Unterhaltungsbereich geeignet sind.

Europäisches Patentamt
European Patent Office
Office européen des brevets

# EUROPÄISCHER RECHERCHENBERICHT

Nummer der Anmeldung
EP 14 17 0369

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D<br>Y | DE 103 30 722 A1 (BAYER AG [DE]) 10. Februar 2005 (2005-02-10)<br>* Zusammenfassung; Ansprüche; Beispiele; Tabellen 1-3 *<br>* Absätze [0122], [0151], [0152] * | 1,3-9<br>2 | INV.<br>C08L67/02<br>C08K3/32 |
| X | US 2005/165176 A1 (MATSUSHIMA MITSUNORI [JP] ET AL) 28. Juli 2005 (2005-07-28)<br>* Zusammenfassung; Ansprüche; Beispiel 5 * | 1,7-9 | |
| Y | DE 10 2011 087869 A1 (BASF SE [DE]) 6. September 2012 (2012-09-06)<br>* Zusammenfassung *<br>* Absatz [0035] * | 2 | |
| A | EP 1 967 549 A1 (WINTECH POLYMER LTD [JP]) 10. September 2008 (2008-09-10)<br>* Zusammenfassung; Ansprüche; Beispiele * | 1-9 | |

RECHERCHIERTE SACHGEBIETE (IPC)
C08L

Der vorliegende Recherchenbericht wurde für alle Patentansprüche erstellt

1

| Recherchenort | Abschlußdatum der Recherche | Prüfer |
|---|---|---|
| Den Haag | 5. November 2014 | Mettler, Rolf-Martin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 14 17 0369

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-11-2014

| Im Recherchenbericht angeführtes Patentdokument | Datum der Veröffentlichung | Mitglied(er) der Patentfamilie | Datum der Veröffentlichung |
|---|---|---|---|
| DE 10330722 A1 | 10-02-2005 | KEINE | |
| US 2005165176 A1 | 28-07-2005 | CN 1646629 A | 27-07-2005 |
| | | JP 4641377 B2 | 02-03-2011 |
| | | JP 5237348 B2 | 17-07-2013 |
| | | JP 2011052223 A | 17-03-2011 |
| | | US 2005165176 A1 | 28-07-2005 |
| | | US 2007135587 A1 | 14-06-2007 |
| | | WO 03085046 A1 | 16-10-2003 |
| DE 102011087869 A1 | 06-09-2012 | KEINE | |
| EP 1967549 A1 | 10-09-2008 | CN 101346429 A | 14-01-2009 |
| | | EP 1967549 A1 | 10-09-2008 |
| | | ES 2380238 T3 | 09-05-2012 |
| | | JP 5425403 B2 | 26-02-2014 |
| | | PT 1967549 E | 11-04-2012 |
| | | US 2010233474 A1 | 16-09-2010 |
| | | WO 2007077794 A1 | 12-07-2007 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2004315805 A
- DE 10330722 A1
- JP 2008106217 A
- JP 2008163167 A
- JP 2007186584 A
- JP 2005133087 A
- JP 2009019134 A
- JP 2007169358 A
- WO 2011144502 A
- WO 2012119966 A
- WO 2012143314 A
- WO 2012119996 A
- WO 2012119967 A
- DE 4401055 A
- EP 208187 A
- EP 50265 A
- US PS4148846 A
- DE 3725576 A
- EP 235690 A
- DE 3800603 A
- EP 319290 A
- EP 1722984 B1
- EP 1353986 B1
- DE 10054859 A1
- DE 19916104 A1


### In der Beschreibung aufgeführte Nicht-Patentliteratur


- *Kunststoffe,* 1997, vol. 87 (11), 1632-1640
- *Kunststoffe,* 1997, vol. 87 (3), 348-350
- *Kunststoffe,* 1998, vol. 88 (2), 210-212
- *Plastverarbeiter,* 1999, vol. 50 (4), 18-19
- *Plastverarbeiter,* 1995, vol. 46 (9), 42-46
- **G. W. EHRENSTEIN.** Handbuch Kunststoff-Verbindungstechnik. Hanser
- DVS-Richtlinie 2243. *Laserstrahlschweißen thermoplastischer Kunststoffe*
- **HOUBEN-WEYL.** Methoden der organischen Chemie. Georg-Thieme-Verlag, 1961, vol. 14/1, 392-406
- **C.B. BUCKNALL.** Toughened Plastics. Applied Science Publishers, 1977
- **SCHILDKNECHT.** Vinyl and Related Polymers. Wiley-Verlag, 1952, 484-494
- **WALL.** Fluorpolymers. Wiley Interscience, 1972